(19) Europäisches Patentamt
European Patent Office
Office européen des brevets

(11) EP 0 576 948 B1

(12) EUROPÄISCHE PATENTSCHRIFT

(45) Veröffentlichungstag und Bekanntmachung des Hinweises auf die Patenterteilung:
**24.07.1996 Patentblatt 1996/30**

(51) Int Cl.6: **C08L 55/02**, C08L 69/00, C08L 33/02

(21) Anmeldenummer: **93109870.1**

(22) Anmeldetag: **21.06.1993**

(54) **Thermoplastische Formmassen**

Thermoplastic moulding materials

Masses à mouler thermoplastiques

(84) Benannte Vertragsstaaten:
**BE DE ES FR GB IT NL**

(30) Priorität: **03.07.1992 DE 4221934**

(43) Veröffentlichungstag der Anmeldung:
**05.01.1994 Patentblatt 1994/01**

(73) Patentinhaber: **BAYER AG**
**51368 Leverkusen (DE)**

(72) Erfinder:
- **Eichenauer, Herbert, Dr.**
**D-4047 Dormagen 1 (DE)**
- **Ott, Karl-Heinz, Dr.**
**D-5090 Leverkusen 1 (DE)**
- **Pischtschan, Alfred, Dr.**
**D-5067 Kürten (DE)**
- **Piejko, Karl-Erwin, Dr.**
**D-5060 Bergisch Gladbach 2 (DE)**

(56) Entgegenhaltungen:
**EP-A- 0 062 838**
**EP-A- 0 207 388**
**EP-A- 0 558 265**
**EP-A- 0 564 242**
**DE-A- 3 325 702**
**US-A- 3 499 950**
**US-A- 4 487 881**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 576 948 B1

Printed by Jouve, 75001 PARIS (FR)

## Beschreibung

Die Erfindung betrifft thermoplastische Formmassen aus ABS-Polymerisaten und aromatischen Polycarbonaten, ein Verfahren zu ihrer Herstellung und ihre Verwendung zur Herstellung von Formkörpern.

Gemische aus ABS und Polycarbonat und ihre Verwendung als Formmassen sind bekannt. Sie enthalten im allgemeinen ABS-Harz, das z.B. aus einem Copolymerisat von Styrol und Acrylnitril und einem Pfropfcopolymerisat von Styrol und Acrylnitril auf einen Dienkautschuk wie z.B. Polybutadien zusammengesetzt ist und z.B. Polycarbonat auf Basis von Bisphenol A. Diese Formmassen zeichnen sich durch gute Zähigkeit sowohl bei Raumtemperatur als auch bei tiefen Temperaturen, gute Verarbeitbarkeit und eine hohe Wärmeformbeständigkeit aus.

Ein Nachteil derartiger Formmassen ist, daß zur Vermeidung schädlicher Auswirkungen auf das Polycarbonat und damit einhergehender Verschlechterungen der Eigenschaften ten bei der Herstellung immer ABS-Polymerisate eingesetzt werden müssen, die frei von basisch wirkenden Bestandteilen sind.

Aufgrund dieser Forderung mußte bisher immer ein speziell hergestelltes, beziehungsweise aufgearbeitetes ABS-Polymer, welches frei von basischen Bestandteilen ist, für die Verwendung in ABS/Polycarbonat-Mischungen bereitgestellt werden. ABS-Polymerisaten, die nicht von Anfang an für die Mischung mit Polycarbonaten vorgesehen sind, werden oft basische Additive zugesetzt (z.B. als Gleit- und Entformungsmittel). Dies gilt auch für ABS-Polymere, die anderen Polymeren, außer Polycarbonat, zugemischt werden. Solche ABS-Polymere oder ABS-Polymere, die über Recycling aus basischen Additiven enthaltenden Formmassen gewonnen werden, können daher nicht zur Herstellung von ABS/Polycarbonat-Mischungen verwendet werden.

Eine thermoplastische Formmasse aus einem Gemisch aus einem Polycarbonat, einem ABS Pfropfpolymerisat und einem polymeren, ansäurenden Mittel (z.B. Methacrylat/Acrylsäure-Copolymer) ist bekannt aus DE-A-3325702. Die Formmasse ist gekennzeichnet durch verbesserte Stabilität und Schlagzähigkeit.

EP-A-62838 betrifft eine thermoplastische Formasse die aufgebaut ist aus einem Polycarbonat, einem Pfropfmischpolymerisat (z.B. ABS), einem Copolymerisat von Styrol und/oder alpha-Methylstyrol mit Acrylonitril, und einem Terpolymerisat von Styrol, Acrylsäure und Maleinsäureanydrid. Die Formmassen besitzen eine verbesserte Zähigkeit und Wärmeformbeständigkeit.

Es wurde nun gefunden, daß durch Verwendung von speziellen Carboxylgruppen tragenden Polymerharzen als Blendkomponente Mischungen aus aromatischen Polycarbonat-Harzen und basisch wirkende Additive enthaltenden ABS-Harzen hergestellt werden können, welche zu Formteilen mit guten Eigenschaften führen; dabei tritt auch keine Schädigung der Polycarbonatkomponente durch die sauren Verbindungen ein.

Es wird entweder eine spezielle Polymerharzkomponente mit relativ hohem Carboxylgruppengehalt (d.h. hoher Wirksamkeit), jedoch schlechterer Mischbarkeit, in geringerer Menge eingesetzt oder eine andere spezielle Polymerharzkomponente mit niedrigerem Carboxylgruppengehalt (d.h. geringerer Wirksamkeit), jedoch guter Mischbarkeit, in höherer Menge eingesetzt.

Gegenstand der Erfindung sind thermoplastische Formmassen enthaltend

A) Harz vom ABS-Typ,
B) aromatisches Polycarbonatharz,
C) Carboxylgruppen tragendes Polymerharz und gegebenenfalls
D) weitere Polymerharze,

dadurch gekennzeichnet, daß als Komponente A ein ABS-Harz mit mindestens einem basisch wirkenden Additiv eingesetzt wird, Komponente C ausgewählt ist aus

C.1 einem Polymerharz mit einem Gehalt an Carboxylgruppen (-COOH) von 40 bis 62,5 Gew.-%, vorzugsweise 50 bis 62,5 Gew.-%, das sich von Acrylsäure- oder Methacrylsäurepolymeren oder Acryl-/Methacrylsäurecopolymeren ableitet oder

C.2 einem Polymerharz mit einem Gehalt an Carboxylgruppen (-COOH) von 5 bis 30 Gew.-%, vorzugsweise 10 bis 25 Gew.-%, das durch Polymerisation von mindestens zwei Monomeren ausgewählt aus Styrol, Acrylnitril und Acrylsäureester und/oder Methacrylsäureester mit Acrylsäure und/oder Methacrylsäure erhalten wurde und das Gew.-Verhältnis von basisch wirkendem Additiv in A : Carboxylgruppen in C) einen Wert von 5:1 bis 1:1, vorzugsweise 4:1 bis 1:1 (bei Einsatz von Polymerharz C.1) oder einen Wert von 3:1 bis 1:3, vorzugsweise 2:1 bis 1:2 (bei Einsatz von Polymerharz C.2) aufweist.

Die obengenannten thermoplastischen Formmassen enthalten bevorzugt 50 bis 100 Gew.-Teile, besonders bevorzugt 60 bis 90 Gew.-Teile und insbesondere 70 bis 80 Gew.- Teile Komponente A, bevorzugt 1 bis 50 Gew.-Teile, besonders bevorzugt 5 bis 50 Gew.-Teile und insbesondere 10 bis 45 Gew.-Teile Komponente B und bevorzugt 0,2

bis 20 Gew.-Teile, besonders bevorzugt 0,2 bis 15 und insbesondere 0,3 bis 12,5 Gew.-Teile Komponente C.

Harze vom ABS-Typ (Komponente A) im Sinne der vorliegenden Erfindung enthalten 5 bis 100 Gew.-%, vorzugsweise 5 bis 80 Gew.-%, besonders bevorzugt 10 bis 75 Gew.-% eines Pfropfpolymerisats und 95 bis 0 Gew.-%, vorzugsweise 95 bis 20 Gew.-%, besonders bevorzugt 90 bis 25 eines thermoplastischen Copolymerharzes.

Pfropfpolymerisate sind solche, in denen auf einen Kautschuk Styrol oder Methylmethacrylat oder eine Mischung von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituierte Maleinimide oder Mischungen daraus pfropfpolymerisiert sind. Geeignete Kautschuke sind praktisch alle Kautschuke mit Glasübergangstemperaturen $\leq$ 10°C, z.B. Polybutadien, StyrolButadien-Copolymerisate, Acrylnitril-Butadien-Copolymerisate, Polyisopren, Alkylacrylatkautschuke, vorzugsweise $C_1$-$C_8$-Alkylacrylatkautschuke, wie z.B. Poly-n-butylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können weiterhin kleinere Mengen, vorzugsweise bis zu 5 Gew.-% (bezogen auf Kautschukgewicht) vernetzend wirkender ethylenisch ungesättigter Monomerer enthalten. Solche Vernetzer sind z.B. Alkylendiol-di-acrylate und -methacrylate, Polyester-diacrylate und -methacrylate, Divinylbenzol, Trivinylbenzol, Triallylcyanurat, Allylacrylat und -methacrylat, Butadien oder Isopren.

Pfropfgrundlage können auch Acrylatkautschuke mit Kern/Mantel-Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nicht-konjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können. Bevorzugt sind Polybutadien und Alkylacrylatkautschuke.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-% pfropfcopolymerisierte Monomere. Die Kautschuke liegen in diesen Pfropfcopolymerisaten in Form wenigstens partiell vernetzter Teilchen eines mittleren Teilchendurchmessers ($d_{50}$) von im allgemeinen 0,05 bis 20,0 µm, bevorzugt 0,1 bis 2,0 µm und besonders bevorzugt von 0,1 bis 0,8 µm vor.

Derartige Pfropfcopolymerisate können durch radikalische Pfropfcopolymerisation von Monomeren aus der Reihe Styrol, α-Methylstyrol, kernsubstituiertem Styrol, (Meth)-Acrylnitril, Methylmethacrylat, Maleinsäureanhydrid, N-substituiertes Maleinimid in Gegenwart der zu pfropfenden Kautschuke hergestellt werden. Bevorzugte Herstellungsverfahren für solche Pfropfcopolymerisate sind die Emulsions-, Lösungs-, Masse- oder Suspensionspolymerisation.

Die thermoplastischen Copolymerisate können aus den Pfropfmonomeren oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Methylmethacrylat, Maleinsäureanhydrid, Vinylacetat und N-substutiertes Maleinimid. Es handelt sich bevorzugt um Copolymerisate aus 95 bis 50 Gew.-% Styrol, α-Methylstyrol, Methylmethacrylat oder Mischungen daraus mit 5 bis 50 Gew.-% Acrylnitril, Methacrylnitril, Methylmethacrylat, Maleinsäureanhydrid oder Mischungen daraus. Solche Copolymerisate entstehen auch bei der Pfropfcopolymerisation als Nebenprodukte. Es ist üblich, neben den im Pfropfpolymerisat enthaltenen Copolymeren noch getrennt hergestellte Copolymere zuzumischen. Diese müssen nicht mit den in den Pfropfpolymeren vorliegenden ungepfropften Harzanteilen chemisch identisch sein.

Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20 bis 40 Gew.-% Acrylnitril und 80 bis 60 Gew.-% Styrol oder α-Methylstyrol. Solche Copolymerisate sind bekannt und lassen sich insbesondere durch radikalische Polymerisation, insbesondere durch Emulsions-, Suspensions-, Lösungs- oder Massepolymerisation herstellen. Die Copolymerisate besitzen im allgemeinen mittlere Molekulargewichte ($\overline{M}_w$) von 15.000 bis 200.000, vorzugsweise 50.000 bis 150.000.

Die ABS-Harze können sowohl einzeln als auch im Gemisch eingesetzt werden.

Erfindungsgemaß besonders geeignete ABS-Harze (Komponente A) mit mindestens einem basisch wirkenden Additiv sind solche Produkte, die bereits als reine ABS-Harze zu Formteilen verarbeitet wurden und als solche Teile bereits mindestens einen Benutzungszyklus durchlaufen haben. ABS-Harze, die durch Zurückgewinnung (Recycling) aus bereits benutzten Formteilen erhalten wurden, können daher nach der vorliegenden Erfindung besonders bevorzugt zur Herstellung neuer Formteile wiederverwendet werden.

Als basisch wirkende Additive, die in der ABS-Harz-Komponente enthalten sind, kommen in der Regel solche Verbindungen in Frage, die dem ABS-Harz zur Verbesserung seiner Eigenschaften (z.B. als Gleitmittel, als Entformungsmittel, als Antistatikum, als Stabilisator, als Lichtschutzmittel u.a.) zugesetzt wurden.

Beispiele für derartige Verbindungen sind Carbonsäure-(di)amide z.B. Stearinsäureamid oder Ethylendiaminbisstearylamid, Metallsalze von langkettigen Carbonsäuren, z.B. Calciumstearat, ethoxylierte Fettamine, Fettsäureethanolamide, sterisch gehinderte Phenole, z.B. 2,4-Bis(n-octylthio)-6-(4-hydroxy-3,5-tert.-butylanilino)-1,3,5-triazin, sterisch gehinderte Amine, z.B. Sebacinsäure-bis-2,2,4,4-tetramethyl-4-piperidylester, Benzotriazolderivate, z.B. 2-(2'-Hydroxy-5'-methylphenyl)-benzotriazol.

Der Anteil der basisch wirkenden Additive, bezogen auf das ABS-Harz, liegt im allgemeinen bei 0,01 bis 5 Gew.-%, wobei die angegebenen Grenzen nicht kritisch sind, und mehr oder weniger enthalten sein kann.

Aromatische Polycarbonatharze (Komponente B) im Sinne der vorliegenden Erfindung können sowohl Homopolycarbonate als auch Copolycarbonate aus den Diphenolen der Formeln (I) und (II) sein

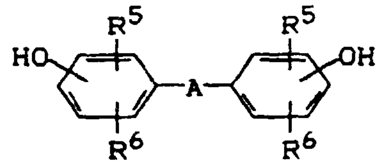

(I)

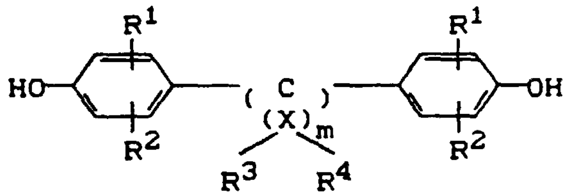

(II)

worin

A eine Einfachbindung, $C_1$-$C_5$-Alkylen, $C_2$-$C_5$-Alkyliden, $C_5$-$C_6$-Cycloalkyliden, -O-, -S-, oder -$SO_2$- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen, bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zahl von 4 bis 7, bevorzugt 4 oder 5, ist,

$R^3$ und $R^4$ für jedes X individuell wählbar sind und unabhängig voneinander Wasserstoff oder $C_1$-$C_6$-Alkyl, vorzugsweise Methyl oder Ethyl, bedeuten und

X Kohlenstoff bedeutet.

Die Polycarbonate gemäß Komponente B können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei sein.

Die Polycarbonate B können sowohl einzeln als auch im Gemisch eingesetzt werden.

Die Diphenole der Formeln (I) und (II) sind entweder literaturbekannt oder nach literaturbekannten Verfahren herstellbar (siehe z.B. EP-A 0 359 953).

Die Herstellung der erfindungsgemäß geeigneten Polycarbonate gemäß Komponente B ist literaturbekannt und kann z.B. mit Phosgen nach dem Phasengrenzflächenverfahren oder mit Phosgen nach den Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 2 842 005 oder Monoalkylphenole oder Dialkylphenole mit insgesamt 8 bis 20 C-Atomen in den Alkylsubstituenten gemäß DE-OS 3 506 472, wie z.B. p-Nonylphenol, 2,5-di-tert.-Butylphenol, p-tert.-Octylphenol, p-Dodecylphenol, 2-(3,5-Dimethylheptyl)phenol und 4-(3,5-Dimethylheptyl)phenol.

Die Menge an einzusetzenden Kettenabbrechern beträgt im allgemeinen zwischen 0,5 und 10 Mol-%, bezogen auf die Summe der jeweils eingesetzten Diphenole (I) und (II).

Die erfindungsgemäß geeigneten Polycarbonate gemäß Komponente B können in bekannter Weise verzweigt sein, und zwar vorzugsweise durch den Einbau von 0,05 bis 2,0 Mol-%, bezogen auf die Summe der eingesetzten Diphenole, an drei oder mehr als dreifunktionellen Verbindungen, z.B. solchen mit drei- oder mehr als drei phenolischen OH-Gruppen (Trihydroxybenzol).

Sie haben mittlere Gewichtsmittelmolekulargewichte ($\overline{M}_w$ gemessen z.B. durch Ultrazentrifugation oder Streulichtmessung) von 10.000 bis 200.000, vorzugsweise von 20.000 bis 80.000.

Geeignete Diphenole der Formeln (I) und (II) sind z.B. Hydrochinon, Resorcin, 4,4'-Dihydroxydiphenyl,

2,2-Bis(4-hydroxyphenyl)-propan,

2,4-Bis(4-hydroxyphenyl)-2-methylbutan,
2,2-Bis(4-hydroxy-3,5-dimethylphenyl)-propan,
2,2-Bis(4-hydroxy-3,5-dichlorphenyl)-propan,
2,2-Bis(4-hydroxy-3,5-dibromphenyl)-propan,
1,1-Bis(4-hydroxyphenyl)-cyclohexan,
1,1-Bis(4-hydroxyphenyl)-3,3,5-trimethylcyclohexan,
1,1-Bis(4-hydroxyphenyl)-3,3-dimethylcyclohexan,
1,1-Bis(4-hydroxyphenyl)-3,3,5,5-tetramethylcyclohexan oder
1,1-Bis(4-hydroxyphenyl)-2,4,4-trimethylcyclopentan.

Bevorzugte Diphenole der Formel (I) sind

2,2-Bis(4-hydroxyphenyl)-propan und
1,1-Bis(4-hydroxyphenyl)-cyclohexan.

Bevorzugtes Phenol der Formel (II) ist 1,1-Bis(4-hydroxyphenyl)-3,3,5-trimethylcyclohexan. Es können auch Mischungen von Diphenolen eingesetzt werden.

Erfindungsgemäß besonders geeignete Polycarbonatharze (Komponente B) sind solche Produkte, die (gegebenenfalls in Abmischung mit von basisch wirkenden Additiven freien ABS-Harzen) bereits zu Formteilen verarbeitet wurden und als solche Teile bereits mindestens einen Benutzungszyklus durchlaufen haben, d.h. bevorzugt sind Polycarbonat-Harze, die durch Zurückgewinnung (Recycling) aus bereits benutzten Formteilen erhalten wurden.

Carboxylgruppen tragende Polymerharze (Komponente C) im Sinne der vorliegenden Verbindung sind entweder Polymerisate, die einen Gehalt an Carboxylgruppen (-COOH) von 40 bis 62,5 Gew.-% aufweisen und sich von Acrylatpolymeren ableiten oder Polymerisate, die einen Gehalt an Carboxylgruppen (-COOH) von 5 bis 30 Gew.-% aufweisen und spezielle Ter- oder Quaterpolymere darstellen.

Als erstgenannte Polymerisate kommen z.B. Polyacrylsäure, Polymethacrylsäure, Acrylsäure/Methacrylsäure-Copolymere sowie teilverseifte Polyacrylsäureester und teilverseifte Polymethacrylsäureester in Frage; bevorzugt sind Polyacrylsäure und Polymethacrylsäure. Derartige Polymerisate sind bekannt.

Unter den speziellen Ter- oder Quaterpolymeren werden solche Polymerisate verstanden, die durch Polymerisation von mindestens zwei Monomeren ausgewählt aus Styrol, Acrylnitril und Acrylsäureester und/oder Methacrylsäureester, vorzugsweise Acrylsäureester oder Methacrylsäureester von Alkoholen mit 1 bis 10 C-Atomen, mit einem eine Carboxylgruppe tragenden Monomeren ausgewählt aus Acrylsäure und Methacrylsäure erhalten wurden.

Prinzipiell können diese Polymerisate weitere Vinylmonomere in geringen Mengen, vorzugsweise unter 10 Gew.-%, eingebaut enthalten.

Beispiele für Polymerisate gemäß Komponente C, die ebenfalls bekannt sind, sind Styrol/Acrylnitril/Acrylsäure-Polymer, Styrol-Acrylnitril/Methacrylsäure-Polymer, Styrol- Methylmethacrylat/Methacrylsäure-Polymer, Methylmethacrylat!Acrylnitril !Acrylsäure-Polymer, Styrol/Methylmethacrylat/Acrylnitril/Methacrylsäure-Polymer, Ethylacrylat/Styrol/Methacrylsäure-Polymer, n-Butylacrylat/Styrol/Methacrylsäure-Polymer.

Bevorzugt sind Styrol/Acrylnitril/Acrylsäure-Polymere und Styrol/Acrylnitril/Methacrylsäure-Polymere.

Prinzipiell als Komponente C geeignet sind die genannten Polymerisate mit mittleren Molekulargewichten ($\overline{M}_w$) zwischen 1.000 und 500.000, bevorzugt sind solche mit $\overline{M}_w$-Werten zwischen 1.000 und 300.000, und besonders bevorzugt zwischen 1.500 und 100.000 und insbesondere 1.500 und 80.000.

Gegebenenfalls können die erfindungsgemäßen thermoplastischen Formmassen weitere Polymerharze in geringen Anteilen, vorzugsweise unter 20 Gew.-%, besonders bevorzugt unter 10 Gew.-%, enthalten. Beispiele für weitere Polymerharze sind aromatische Polyester, z.B. Polyethylenterephthalat oder Polybutylenterephthalat, thermoplastische Polyurethane, Polyacrylate, z.B. Copolymerisate von (Meth)Acrylatmonomeren mit Acrylnitril oder Polyacetale, z.B. Polyoxymethylen, sowie Polyamide wie z.B. Polyamid 6 oder Polyamid 66.

Weiterhin können den erfindungsgemäßen Formmassen für ABS-Harze und Polycarbonatharze bekannte, vorzugsweise nicht basisch wirkende Zusätze wie z.B. Stabilisatoren, Pigmente, Entformungsmittel, Flammschutzmittel, Gleitmittel und Antistatika in den üblichen Mengen zugesetzt werden.

Die Vermischung der Polymerkomponenten zur Erzeugung der erfindungsgemäßen thermoplastischen Formmassen erfolgt in üblichen Mischaggregaten, so z.B. in Knetern, Innenmischern, auf Walzenstühlen, Schneckenmaschinen oder Extrudern, vorzugsweise oberhalb 200°C. Die Bestandteile können nacheinander oder gleichzeitig gemischt werden, vorzugsweise erfolgt zunächst eine Vermischung der Komponenten (A) und (C) und anschließend eine Vermischung des daraus resultierenden Gemisches mit der Komponente (B) und gegebenenfalls der Komponente (D).

Ein weiterer Gegenstand der Erfindung ist also ein Verfahren zur Herstellung der erfindungsgemäßen Formmassen durch Mischen der Bestandteile bei erhöhter Temperatur.

Die erfindungsgemäßen Formmassen können zur Herstellung von Formkörpern jeder Art, z.B. durch Spritzgießen

oder Extrudieren, verwendet werden. Beispiele für solche Formkörper sind Gehäuseteile, Abdeckplatten oder Automobilteile. Formkörper können auch durch Tiefziehen aus vorher hergestellten Platten oder Folien hergestellt werden. Ein weiterer Gegenstand der Erfindung ist demnach die Verwendung der beschriebenen Formmassen zur Herstellung von Formkörpern.

Beispiele

Eingesetzte Polymerisate:

A.1) ABS-Harz enthaltend

| | |
|---|---|
| 15 Gew.-Teile | eines Pfropfkautschuks aus 50 Gew.-% einer Polybutadiengrundlage mit einem mittleren Teilchendurchmesser ($d_{50}$) von 0,1 µm, auf die 36 Gew.-% Styrol und 14 Gew.-% Acrylnitril aufgepfropft wurden, |
| 15 Gew.-Teile | eines Pfropfkautschuks aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft wurden, |
| 70 Gew.-Teile | eines Styrol/Acrylnitril = 72:28-Copolymerisats mit einem $\overline{M}_w$ von ca. 80.000 mit $\overline{M}_w/\overline{M}_n$ -1 ≤ 2 und |
| 2 Gew.-Teile | Ethylendiaminbisstearylamid, |

hergestellt durch Vermischen der Komponenten in einem Innenkneter.

A.2) ABS-Harz enthaltend

| | |
|---|---|
| 60 Gew.-Teile | eines Pfropfkautschuks aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft wurden, |
| 40 Gew.-Teile | eines Styrol/Acrylnitril = 72:28-Copolymerisats mit einem $\overline{M}_w$ von ca. 80.000 mit $\overline{M}_w/\overline{M}_n$ -1 ≤ 2 und |
| 1 Gew.-Teil | eines Gemisches ethoxylierter Fettamine, |

hergestellt durch Vermischen der Komponenten in einem Innenkneter.

A.3) ABS-Harz enthaltend

| | |
|---|---|
| 15 Gew.-Teile | eines Pfropfkautschuks aus 50 Gew.-% einer Polybutadiengrundlage mit einem mittleren Teilchendurchmesser ($d_{50}$) von 0,1 µm, auf die 36 Gew.-% Styrol und 14 Gew.-X Acrylnitril aufgepfropft wurden, |
| 15 Gew.-Teile | eines Pfropfkautschuks aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft wurden, |
| 40 Gew.-Teile | eines α-Methylstyrol/Acrylnitril = 72:28-Copolymerisats mit einem $\overline{M}_w$ von ca. 65.000 mit $\overline{M}_w/\overline{M}_n$ -1 ≤ 2 und |
| 30 Gew.-Teile | eines Styrol/Acrylnitril = 72:28-Copolymerisats mit einem $\overline{M}_w$ von ca. 80.000 mit $\overline{M}_w/\overline{M}_n$ -1 ≤ 2 und |
| 1 Gew.-Teil | Magnesiumstearat, |

hergestellt durch Vermischen der Komponenten in einem Innenkneter.

B.1) Aromatisches Polycarbonat aus 2,2-Bis-(4-hydroxyphenyl)-propan (Bisphenol A) mit einer relativen Viskosität von 1,26 (gemessen in $CH_2Cl_2$ bei 25°C in Form einer 0,5 Gew.-%igen Lösung), entsprechend einem $\overline{M}_w$ von ca. 25.000.

C.1.1) Polyacrylsäure mit einem $\overline{M}_w$ von ca. 2.000 (Aldrich) (Carboxylgruppengehalt ca. 62 Gew.-%).

C.1.2) Polyacrylsäure mit einem $M_w$ von ca. 250.000 (Aldrich) (Carboxylgruppengehalt ca. 62 Gew.-%).

C.2.1) Harz aus Styrol, Acrylnitril und Methacrylsäure

In einem Reaktor werden 120 Gew.-Teile Wasser, 2 Gew.-Teile des Natriumsalzes von $C_9$-$C_{18}$-Alkylsulfonsäuren als Emulgator und 0,3 Gew.-Teile Kaliumpersulfat auf 70°C erwärmt, wonach eine Mischung aus 57,6 Gew.-Teilen Styrol, 22,4 Gew.-Teilen Acrylnitril, 20 Gew.-Teilen Methacrylsäure und 1,0 Gew.-Teilen tert.-Dodecylmercaptan innerhalb 4 Stunden zudosiert wird. Nach einer Nachreaktionszeit wird der Latex nach der Zugabe von 1,2 Gew.-Teilen Antioxidantien in einer wäßrigen Magnesiumsulfat/Essigsäure-Lösung koaguliert. Das resultierende Pulver wird mit Wasser, einer sauren Lösung und nochmals mit Wasser gewaschen und bei 70°C im Vakuum getrocknet.

Das Harz weist eine spezifische Viskosität ($\eta$ spez.$_{/c}$ bei c = 5 g/l in Dimethylformamid bei 25°C) von 41 und einen Gehalt an Carboxylgruppen von ca. 10 Gew.-% auf ($\overline{M}_w$ ca. 28.000).

C.2.2) Harz aus Methylmethacrylat, Acrylnitril und Methacrylsäure

Die Herstellung des Harzes erfolgt in Analogie zur unter C.2.1 beschriebenen Rezeptur, wobei eine Mischung aus 51 Gew.-Teilen Methylmethacrylat, 34 Gew.-Teilen Acrylnitril, 15 Gew.-Teilen Methacrylsäure und 0,4 Gew.-Teilen tert.-Dodecylmercaptan innerhalb 4 Stunden zudosiert wird. Das erhaltene Harz besitzt eine spezifische Viskosität ($\eta$ spez.$_{/c}$ bei c = 5 g/l in DMF bei 25°C) von 78 und einen Gehalt an Carboxylgruppen von ca. 10 Gew.-%. ($\overline{M}_w$ ca. 76.000).

Herstellung und Ausprüfung der Formmassen

Drch Abmischen der in Tabelle 1 angegebenen Gew.-Teile der oben beschriebenen Komponenten in einem Innenkneter bei ca. 200°C wurden Formmassen hergestellt, die anschließend bei 250°C zu Prüfkörpern verspritzt wurden. Die Kerbschlagzähigkeit wurde bei Raumtemperatur ($a_k^{RT}$) und bei -40°C ($a_k^{-40°C}$) nach ISO 180 A (Einheit kJ/$m^2$), die Schlagzähigkeit bei -40°C ($a_n^{-40°C}$) nach ISO 180 C (Einheit kJ/$m^2$), die Kugeldruckhärte ($H_c$) nach DIN 53456 (Einheit N/$mm^2$), die Wärmeformbeständigkeit (Vicat B) nach DIN 53460 (Einheit °C) gemessen.

Der Oberflächenglanz wurde an einer ebenen Platte gemäß DIN 67530 bei einem Reflektionswinkel von 60° (Reflektometerwert) mit Hilfe des Mehrwinkel-Reflektometers "Multi-Gloss" der Firma Byk-Mallinckrodt ermittelt (siehe Tabelle).

Wie aus den Beispielen zu erkennen ist, weisen die erfindungsgemäßen Formmassen im Vergleich zu den Formmassen ohne Komponente C ein deutlich besseres Eigenschaftsbild, insbesondere eine Kombination aus hoher Zähigkeit (auch bei tiefer Temperatur) und guter Oberflächenbeschaffenheit auf bei gleich guter Wärmeformbeständigkeit (Vicat B) und Kugeldruckhärte ($H_c$).

**Tabelle 1** Zusammensetzungen der Formmassen

| Formmasse | A.1 (Gew.-Teile) | A.2 (Gew.-Teile) | A.3 (Gew.-Teile) | B.1 (Gew.-Teile) | C.1.1 (Gew.-Teile) | C.1.2 (Gew.-Teile) | C.2.1 (Gew.-Teile) | C.2.2 (Gew.-Teile) | Gew.-Verhältnis (basisches Additiv in A):(Carboxylgruppen in C) |
|---|---|---|---|---|---|---|---|---|---|
| 1 | 50 | 27,5 | - | 22,5 | 0,5 | - | - | - | 4,11 |
| 2 | 50 | 27,5 | - | 22,5 | 1 | - | - | - | 2,06 |
| 3 | 50 | 27,5 | - | 22,5 | 2 | - | - | - | 1,03 |
| 4 (Vergleich) | 50 | 27,5 | - | 22,5 | - | - | - | - | - |
| 5 | - | 37,5 | 37,5 | 25 | 1 | - | - | - | 1,21 |
| 6 | 50 | 27,5 | - | 22,5 | - | 2 | - | - | 1,03 |
| 7 | - | 60 | - | 40 | - | - | 5 | - | 1,20 |
| 8 (Vergleich | - | 60 | - | 40 | - | - | - | - | - |
| 9 | 50 | 27,5 | - | 22,5 | - | - | 7,5 | - | 1,70 |
| 10 | - | 37,5 | 37,5 | 25 | - | - | - | 10 | 0,75 |

Tabelle 2 Prüfdaten der Formmassen

| Formmasse | $a_k^{RT}$ | $a_k^{-40^0 C}$ | $a_n^{-40^0 C}$ | $H_c$ | Vicat B | Reflektometerwert |
|---|---|---|---|---|---|---|
| 1 | 11 | 5 | 43 | 99 | 101 | 79 |
| 2 | 12 | 5 | 47 | 100 | 101 | 75 |
| 3 | 14 | 5 | 48 | 98 | 102 | 70 |
| 4 (Vergleich) | 2 | 2 | 12 | 100 | 99 | 55 |
| 5 | 18 | 6 | 63 | 97 | 103 | 78 |
| 6 | 13 | 5 | 47 | 99 | 101 | 74 |
| 7 | 25 | 9 | 106 | 100 | 107 | 76 |
| 8 (Vergleich) | 3 | 2 | 14 | 100 | 108 | 52 |
| 9 | 15 | 6 | 46 | 100 | 100 | 81 |
| 10 | 17 | 6 | 61 | 98 | 104 | 72 |

**Patentansprüche**

1. Thermoplastische Formmassen enthaltend

   A) Harz vom ABS-Typ,
   B) aromatisches Polycarbonatharz,
   C) Carboxylgruppen tragendes Polymerharz und gegebenenfalls
   D) weitere Polymerharze,

   dadurch gekennzeichnet, daß als Komponente A ein ABS-Harz mit mindestens einem basisch wirkenden Additiv eingesetzt wird, Komponente C ausgewählt ist aus

   C.1) einem Polymerharz mit einem Gehalt an Carboxylgruppen (-COOH) von 40 bis 62,5 Gew.-%, das sich von Acrylsäure-oder Methacrylsäurepolymeren oder Acryl-/Methacrylsäurecopolymer ableitet oder

   C.2) einem Polymerharz mit einem Gehalt an Carboxylgruppen (-COOH) von 5 bis 30 Gew.-%, das durch Polymerisation von mindestens zwei Monomeren ausgewählt aus Styrol, Acrylnitril und Acrylsäureester und/oder Methacrylsäureester mit Acrylsäure und/oder Methacrylsäure erhalten wurde

   und das Gew.- Verhältnis von basisch wirkendem Additiv in A) : Carboxylgruppen in C) einen Wert von 5:1 bis 1:1 (bei Einsatz von Polymerharz C.1) oder einen Wert von 3:1 bis 1:3 (bei Einsatz von Polymerharz C.2) aufweist.

2. Thermoplastische Formmassen gemäß Anspruch 1 enthaltend

   A) 50 bis 100 Gew.-Teile Harz vom ABS-Typ,
   B) 1 bis 50 Gew.-Teile aromatisches Polycarbonatharz und
   C) 0,2 bis 20 Gew.-Teile Carboxylgruppen tragendes Polymerharz.

3. Thermoplastische Formmasse gemäß Anspruch 1 und 2, dadurch gekennzeichnet, daß als Komponente A ein ABS-Harz mit mindestens einem basisch wirkenden Additiv eingesetzt wird, Komponente C ausgewählt ist aus C.1) Polyacrylsäure und/oder Polymethacrylsäure und C.2) einem Polymerharz aus Styrol, Acrylnitril und Methacrylsäure und das Gew.-Verhältnis von basisch wirkendem Additiv in A) : Carboxylgruppen in C) einen Wert von 4:1 bis 1:1 (bei Einsatz von Polymerharz C.1) oder einen Wert von 2:1 bis 1:2 (bei Einsatz von Polymerharz C.2) aufweist.

4. Thermoplastische Formmassen gemäß den Ansprüchen 1 und 2 enthaltend als aromatisches Polycarbonatharz Bisphenol A-Polycarbonat.

5. Thermoplastische Formmassen gemäß den Ansprüchen 1 und 2 enthaltend als Komponenten A, B und gegebenenfalls D Polymere, die bereits zu Formteilen verarbeitet wurden und als solche Teile bereits mindestens einen Benutzungszyklus durchlaufen haben.

6. Thermoplastische Formmassen, welche als Komponente D aromatische Polyester, thermoplastische Polyurethane, Polyacrylate, Polyacetale und/oder Polyamide enthalten.

7. Thermoplastische Formmassen gemäß Anspruch 1, welche zusätzlich Stabilisatoren, Pigmente, Entformungsmittel, Flammschutzmittel, Gleitmittel und/oder Antistatika enthalten.

8. Verfahren zur Herstellung von thermoplastischen Formmassen gemäß Anspruch 1, dadurch gekennzeichnet, daß zunächst eine Vermischung der Komponenten (A) und (C) und anschließend eine Vermischung des daraus resultierenden Gemisches mit der Komponente (B) und gegebenenfalls der Komponente (D) jeweils bei erhöhter Temperatur erfolgt.

9. Verwendung von Carboxylgruppen tragenden Polymerharzen gemäß Anspruch 1 zur Stabilisierung von thermoplastischen Formmassen aus Harzen vom ABS-Typ, aromatischen Polycarbonat-Harzen und gegebenenfalls weiteren Polymerharzen.

## Claims

1. Thermoplastic moulding compositions containing

   A) ABS type resin,
   B) aromatic polycarbonate resin,
   C) polymer resin bearing carboxyl groups and optionally
   D) further polymer resins,

   characterised in that an ABS resin with at least one basically acting additive is used as component A, component C is selected from

   C.1) a polymer resin with a carboxyl group (-COOH) content of 40 to 62.5 wt.%, which is derived from acrylic acid polymers or methacrylic acid polymers or acrylic/methacrylic acid copolymers or

   C.2) a polymer resin with a carboxyl group (-COOH) content of 5 to 30 wt.%, which was obtained by polymerisation of at least two monomers selected from styrene, acrylonitrile and acrylic acid esters and/or methacrylic acid esters with acrylic acid and/or methacrylic acid and the weight ratio of basically acting additive in A) : carboxyl groups in C) has a value of 5:1 to 1:1 (when using polymer resin C.1) or a value of 3:1 to 1:3 (when using polymer resin C.2).

2. Thermoplastic moulding compositions according to claim 1 containing

   A) 50 to 100 parts by weight of ABS type resin,
   B) 1 to 50 parts by weight of aromatic polycarbonate resin and
   C) 0.2 to 20 parts by weight of polymer resin bearing carboxyl groups.

3. Thermoplastic moulding composition according to claims 1 and 2, characterised in that an ABS resin with at least one basically acting additive is used as component A, component C is selected from C.1) polyacrylic acid and/or polymethacrylic acid and C.2) a polymer resin prepared from styrene, acrylonitrile and methacrylic acid and the weight ratio of basically acting additive in A) : carboxyl groups in C) has a value of 4:1 to 1:1 (when using polymer resin C.1) or a value of 2:1 to 1:2 (when using polymer resin C.2).

4. Thermoplastic moulding compositions according to claims 1 and 2 containing bisphenol A-polycarbonate as the aromatic polycarbonate resin.

5. Thermoplastic moulding compositions according to claims 1 and 2 containing as component A, B and optionally D polymers which have already been processed into mouldings and which have already passed through at least one cycle of use as such mouldings.

6. Thermoplastic moulding compositions which contain as component D aromatic polyesters, thermoplastic polyurethanes, polyacrylates, polyacetals and/or polyamides.

7. Thermoplastic moulding compositions according to claim 1, which additionally contain stabilisers, pigments, mould release agents, flame retardants, lubricants and/or antistatic agents.

8. Process for the production of thermoplastic moulding compositions according to claim 1, characterised in that components (A) and (C) are initially mixed and then the resultant blend is mixed with component (B) and optionally component (D), in each case at elevated temperature.

9. Use of polymer resins bearing carboxyl groups according to claim 1 for stabilising thermoplastic moulding compositions prepared from ABS type resins, aromatic polycarbonate resins and optionally further polymer resins.

## Revendications

1. Matières à mouler thermoplastiques contenant

A) une résine du type ABS,
B) une résine de polycarbonate aromatique,
C) une résine polymère portant des groupes carboxyle et le cas échéant
D) d'autres résines polymères,

caractérisées en ce que le composant A) est une résine ABS contenant au moins un additif basique, le composant C) est choisi parmi

C.1) une résine polymère contenant de 40 à 62,5% en poids de groupes carboxyle (-COOH), qui dérive de polymères de l'acide acrylique ou de l'acide méthacrylique ou d'un copolymère acide acrylique/acide méthacrylique, ou bien
C.2) une résine polymère contenant de 5 à 30% en poids de groupes carboxyle (-COOH), qui a été obtenue par polymérisation d'au moins deux monomères choisis parmi le styrène, l'acrylonitrile et les esters acryliques et/ou méthacryliques, avec l'acide acrylique et/ou l'acide méthacrylique,

et en ce que le rapport en poids entre l'additif basique contenu dans A) et les groupes carboxyle de C) a une valeur de 5:1 à 1:1 (lorsqu'on a utilisé une résine polymère C.1) ou une valeur de 3:1 à 1:3 (lorsqu'on a utilisé une résine polymère C.2).

**2.** Matières à mouler thermoplastiques selon la revendication 1, contenant

A) 50 à 100 parties en poids d'une résine du type ABS,
B) 1 à 50 parties en poids d'une résine de polycarbonate aromatique et
C) 0,2 à 20 parties en poids d'une résine polymère portant des groupes carboxyle.

**3.** Matières à mouler thermoplastiques selon les revendications 1 et 2, caractérisées en ce que le composant A) est une résine ABS contenant au moins un additif basique, le composant C) est choisi parmi C.1), l'acide polyacrylique et/ou l'acide polyméthacrylique et C.2) une résine polymère du styrène, de l'acrylonitrile et de l'acide méthacrylique, et en ce que le rapport en poids entre l'additif basique contenu dans A) et les groupes carboxyle de C) a une valeur de 4:1 à 1:1 (lorsqu'on a utilisé une résine polymère C.1) ou une valeur de 2:1 à 1:2 (lorsqu'on a utilisé une résine polymère C.2).

**4.** Matières à mouler thermoplastiques selon les revendications 1 et 2, qui contiennent en tant que résine de polycarbonate aromatique un polycarbonate du bisphénol A.

**5.** Matières à mouler thermoplastiques selon les revendications 1 et 2, contenant en tant que composants A), B) et le cas échéant D) des polymères qui ont déjà été façonnés en pièces moulées et, sous cette forme, ont déjà subi au moins un cycle d'utilisation.

**6.** Matières à mouler thermoplastiques contenant en tant que composant D) un polyester aromatique, un polyuréthane thermoplastique, un polyacrylate, un polyacétal et/ou un polyamide.

**7.** Matières à mouler thermoplastiques selon la revendication 1, contenant en outre des stabilisants, des pigments, des agents de démoulage, des agents ignifugeants, des agents lubrifiants et/ou des agents antistatiques.

**8.** Procédé de préparation des matières à mouler thermoplastiques selon la revendication 1, caractérisé en ce que l'on mélange d'abord les composants A) et C) puis on ajoute au mélange le composant B) et le cas échéant le composant D) et on mélange dans les deux cas à température élevée.

**9.** Utilisation de résines polymères portant des groupes carboxyle selon la revendication 1 pour la stabilisation de matières à mouler thermoplastiques consistant en résines du type ABS, résines de polycarbonates aromatiques et le cas échéant d'autres résines polymères.